# EUROPEAN PATENT APPLICATION

(11) **EP 3 761 467 A1**
(43) Date of publication of application: **06.01.2021**
(21) Application number: 19184245.9
(22) Date of filing: 03.07.2019
(51) Int. Cl.: H02G 1/00, E02B 17/02, H02G 1/10, H02G 9/02, H02G 9/06, F16L 1/12, E02B 17/00

(54) **METHOD OF INSTALLING A TRANSMISSION CABLE ARRANGEMENT**

(71) Applicant: Siemens Gamesa Renewable Energy A/S, 7330 Brande (DK)
(72) Inventor: Soerensen, Johnny, 6920 Videbæk (DK)
(74) Representative: Aspacher, Karl-Georg

(57) **Abstract**

The invention describes a method of installing a transmission cable arrangement (4) of an offshore wind turbine (2), comprising a step of providing a cable protection assembly (1), wherein provision of the cable protection assembly (1) comprises the steps of installing an outer protective pipe (PP0) at a marine foundation (3), which outer protective pipe (P0) is realised to extend from a cable hang-off (33) to the seabed (B); and laying an inner protective pipe (PP1) through the outer protective pipe (PP0) to extend from the cable hang-off (33) to a further destination; and wherein the method of installing a transmission cable arrangement (4) further comprises a step of loading the transmission cable arrangement (4) into the inner protective pipe (PP1) towards the further destination (5). The invention further describes a cable protection assembly (1), and a wind turbine assembly.

## Description

Electricity generated by a wind turbine is exported through a transmission cable arrangement, which comprises several power cables suspended from the wind turbine generator down through the tower and then to the outside. In the case of an offshore wind turbine, a submarine cable connects the wind turbine to another wind turbine in an offshore array or to a substation, for example. Between such end-points, the submarine cable is generally laid on the seabed or buried at some depth below the seabed. A submarine cable must be protected from damage, for example from fishing vessels or similar. To protect the power cables and communications cables in its interior, a submarine cable is generally armoured, for example by embedding steel wire strands in a layer of the cable body, and may comprise several nested protective layers. This type of cable is costly to manufacture, so that submarine cables are generally very expensive.

For each offshore wind turbine, it is necessary for the submarine cable to extend from an upper level of the supporting structure of the wind turbine to the seabed. A cable hang-off is generally provided at an upper level of the supporting structure to make sure that the vertical portion of the submarine cable is not subject to any tensile forces. In some known arrangements, a vertical steel "J-tube" can be attached to the outside of the supporting structure and serves to protect the vertical section of the submarine cable from damage. At the base of the J-tube, the submarine cable is guided onto or into the seabed. However, a known problem with offshore wind turbines is that the seabed can be scoured from the foot of the supporting structure, and the heavy submarine cable is then no longer supported from below. Damage to the submarine cable can result, leading to costly repair procedures.

Various types of supporting structures are known, for example a jacket foundation, a tripod foundation, etc. A further type of foundation is a monopile foundation, which is prepared by pile-driving a monopile into the seabed, and then mounting a transition piece onto the exposed upper end of the monopile. The upper level of the transition piece is above sea-level. A wind turbine tower is mounted to the upper level of the transition piece, which may include a platform to allow service technicians access to the base of the wind turbine tower. As described above, a J-tube can be attached to the outside of the monopile, and the power cables can be led through the J-tube to the level of the seabed.

In an alternative approach, the power cables extend from the wind turbine tower down into the interior of the transition piece, and through an aperture at the base of the transition piece to the seabed. A J-tube is not required in such an approach. However, installation of the submarine cable is made more difficult, since it is necessary to guide the end of the submarine cable in through the relatively small aperture and up into the transition piece to the level of the cable hang-off. This is generally done using a messenger wire to pull the submarine cable in through the aperture, and a remotely operated underwater vehicle (ROV) to push the submarine cable, using cameras of the ROV to monitor the procedure. However, visibility at the base of the foundation can be very poor, so that the installation procedure can be lengthy and expensive, and damage may result to the submarine cable on account of the poor visibility.

It is therefore an object of the invention to provide an improved way of protecting the transmission cables of an offshore wind turbine.

This object is achieved by the method of claim 1 of installing a transmission cable arrangement of an offshore wind turbine; by the cable protection assembly of claim 7; and by the wind turbine assembly of claim 13.

According to the invention, the method of installing a transmission cable arrangement of an offshore wind turbine comprises a step of providing a cable protection assembly and then loading a transmission cable arrangement into the cable protection assembly. Provision of the cable protection assembly comprises a step of installing an outer protective pipe at a marine foundation, which outer protective pipe is realised to extend from a wind turbine cable hang-off (at an upper level of the marine foundation) to a point on the seabed near the base of the marine foundation. The inventive method comprises a subsequent step of laying an inner protective pipe through the outer protective pipe to extend from a first termination point (e.g. at the cable hang-off) to a second termination point further away, for example at a neighbouring wind turbine in an offshore array, a substation, etc. After installation of the cable protection assembly, a transmission cable arrangement is loaded into the inner protective pipe to extend between the first termination point and the second termination point.

An advantage of the inventive cable protection assembly is that it is an economical way of protecting the transmission cable arrangement. It can be a simple arrangement of two nested hollow pipes. The inventor has realised that this "pipe-in-pipe" arrangement affords a higher degree of protection to a transmission cable arrangement, compared to the protection that is possible when only a single hollow pipe is used to contain the transmission cable arrangement. Furthermore, the pipe-in-pipe cable protection assembly makes it possible to avoid damage to the transmission cable arrangement during installation, as will be explained below.

The cable protection assembly can be put into place once the marine foundation is ready, i.e. before the wind turbine is installed on the foundation. Generally, the transmission cable arrangement will be installed - i.e. fed into the inner protective pipe - after the wind turbine has been erected, since the transmission cables will be connected to a power converter of the wind turbine.

According to the invention, the cable protection assembly for a transmission cable arrangement of an offshore wind turbine comprises an outer protective pipe suspended from a cable hang-off of a marine foundation and extending to the seabed; and an inner protective pipe extending between that offshore wind turbine and a further destination, which inner protective pipe is suspended from the cable hang-off and extends through the outer protective pipe to the seabed.

According to the invention, the wind turbine assembly comprises an offshore wind turbine mounted on a marine foundation, and also comprises an embodiment of the inventive cable protection system.

Particularly advantageous embodiments and features of the invention are given by the dependent claims, as revealed in the following description. Features of different claim categories may be combined as appropriate to give further embodiments not described herein.

The marine foundation of an offshore wind turbine may be a monopile foundation, a tripod foundation, a jacket structure, etc. In the following, without restricting the invention in any way, it may be assumed that the foundation is a monopile foundation of the type described in the introduction, with an aperture at the base of the transition piece.

In the inventive method, the step of installing the outer protective pipe preferably comprises a step of guiding the empty outer protective pipe through the aperture at the base of the monopile. Preferably, this procedure is facilitated by a previously installed messenger wire and a winch assembly provided at the level of the cable hang-off in the interior of the transition piece. The messenger wire can be installed easily using an ROV, since it is not difficult to lead the thin messenger wire through the relatively large aperture, even if visibility is poor at the base of the foundation. The "inner" end of the messenger wire is secured to the winch assembly at the cable hang-off level, while the "outer" end of the messenger wire is temporarily secured to the exterior of the monopile foundation, for example to the working platform of the transition piece.

The outer protective pipe can be supplied from an installation vessel as will be known to the skilled person. The "outer" end of the messenger wire can be retrieved and attached to the free end of the outer protective pipe, which may be supplied on a drum. Unreeling the outer protective pipe can be assisted by a roller-wheel assembly that acts to "push" the pipe from the installation vessel. At the same time, the messenger wire is wound back onto the winch. This push-pull action can ensure that installation of the outer protective pipe is quickly completed. An ROV may be used to assist in guiding the end of the outer protective pipe through the aperture. When the procedure is complete, one end of the outer protective pipe is secured at the cable hang-off level, and the other end of the outer protective pipe is temporarily secured to the working platform of the transition piece.

In the following, without restricting the invention in any way, it may be assumed that the outer protective pipe comprises a HDPE pipe, i.e. a hollow pipe made of high-density polyethylene. HDPE is favoured for its flexibility and permeability, as well as its ability to withstand pressure. The wall thickness of the outer protective pipe can be in the region of 4 cm - 10 cm. The bending radius of such an HDPE pipe can be at least the minimum bending radius of the cable, for example 2.4 metres. Such an outer protective pipe is effective at protecting the cable arrangement from the hostile offshore environment, especially in the critical zone between the supporting structure and the seabed.

In a subsequent step, the inner protective pipe is pushed into the outer protective pipe. Again, the inner protective pipe can be supplied from an installation vessel. The inner protective pipe may also be made of HDPE.

The free end of the outer protective pipe is retrieved and brought to the installation vessel, and one end of the inner protective pipe is inserted into the outer protective pipe. Preferably, the inner diameter of the outer protective pipe exceeds the outer diameter of the inner protective pipe by at least 20%. The inner protective pipe may be supplied on a drum, and unreeling the inner protective pipe can be assisted as described above by a roller-wheel assembly that acts to "push" the pipe from the installation vessel. As soon as the free end of the inner protective pipe appears at the level of the cable hang-off in the interior of the transition piece, it can be secured in some appropriate manner. The installation vessel can then proceed to move in the direction of the destination, i.e. in the direction of the second termination point. The free end of the outer protective pipe is allowed to drop to the seabed along with the inner protective pipe. An optional step of burying the inner protective pipe below the seabed can be done at this time, or at a later stage. When the procedure is complete, the inner protective pipe extends from the first termination point inside the transition piece to the second termination point at the destination. These steps can all be completed before the wind turbine is installed on the monopile foundation.

In a subsequent step, the transmission cable arrangement is pushed into the inner protective pipe. Again, the transmission cable arrangement can be supplied from an installation vessel. The transmission cable arrangement can comprise several power cables in a bundle, for example. Data communication cables may also be part of the transmission cable arrangement. A free end of the transmission cable arrangement is inserted into the inner protective pipe at the level of the cable hang-off. The transmission cable arrangement can be water-jetted into the inner protective pipe, for example if the distance between first and second termination points is very long.

Preferably, the inner diameter of the inner protective pipe exceeds the outer diameter of the transmission cable arrangement by a certain amount, for example by 20%, to leave some space between the transmission cable arrangement and the inner pipe. The wall thickness of the inner protective pipe can be in the region of 1 cm - 2.5 cm. Because the cable protection arrangement is already installed before the transmission cable is loaded into the inner protective pipe, the transmission cable is protected from damage at the edges of the aperture of the monopile foundation. Furthermore, it is relatively straightforward to push a transmission cable arrangement into the hollow inner protective pipe, so that installation of the transmission cable arrangement can be favourably quick and therefore also economical.

Because the transmission cable arrangement is protected by the pipe-in-pipe cable protection assembly, armouring of any of these elements is not necessary. A material such as HDPE is economical, so that the per-meter costs of the cable protection system is favourably low compared to the conventional armoured submarine cables known from the prior art. If some amount of armouring is desired, the outer and/or inner protective pipe can be manufactured to include embedded armouring. For example, steel strips or wires can be embedded in a HDPE pipe during the extrusion process.

In a preferred embodiment of the invention, water may be filled into the space between the transmission cable arrangement and the inner protective pipe. The water surrounding the transmission cable arrangement can effectively cool the transmission cables, and can also provide additional protection to the transmission cable arrangement since water is non-compressible.

Other objects and features of the present invention will become apparent from the following detailed descriptions considered in conjunction with the accompanying drawings. It is to be understood, however, that the drawings are designed solely for the purposes of illustration and not as a definition of the limits of the invention.
- Fig 1: shows a marine foundation for an offshore wind turbine;
- Figs 2 - 5: show stages in the inventive method of installing a cable protection assembly for a wind turbine transmission cable arrangement;
- Fig 6: shows a cross-section through an embodiment of the inventive cable protection assembly;
- Fig 7: shows a cross-section through a further embodiment of the inventive cable protection assembly;
- Fig 8: shows a cross-section through a further embodiment of the inventive cable protection assembly;
- Fig 9: shows part of an offshore wind turbine array.

In the diagrams, like numbers refer to like objects throughout. Objects in the diagrams are not necessarily drawn to scale.

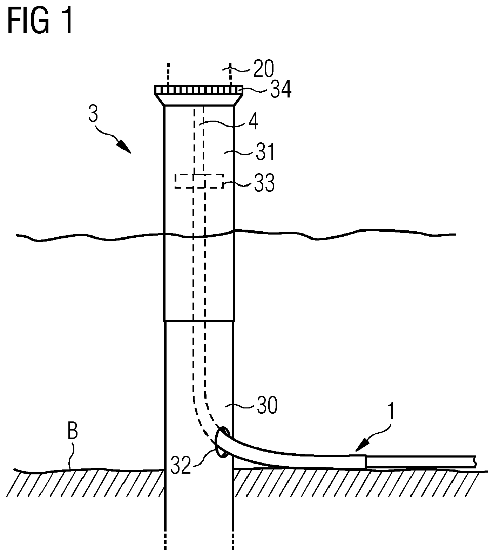

Fig 1 shows a marine foundation 3 for an offshore wind turbine. In this exemplary embodiment, the marine foundation 3 is a monopile foundation comprising a monopile 30 that is driven partially into the seabed B, and a hollow vertical transition piece 31 mounted on the foundation 30. The wind turbine tower 20 will be mounted to the transition piece 31. The transmission cables 4 or power export cables 4 of the wind turbine 2 will be protected by a cable protection assembly 1 that is suspended from a cable hang-off 33 in the interior of the transition piece 31 and that extends down towards the monopile 30, exiting the transition piece 31 through an aperture 32 to reach the seabed B. The installation of the inventive cable protection assembly 1 can be done prior to installation of the wind turbine, and the tower 20 is shown here only for the purpose of illustration.

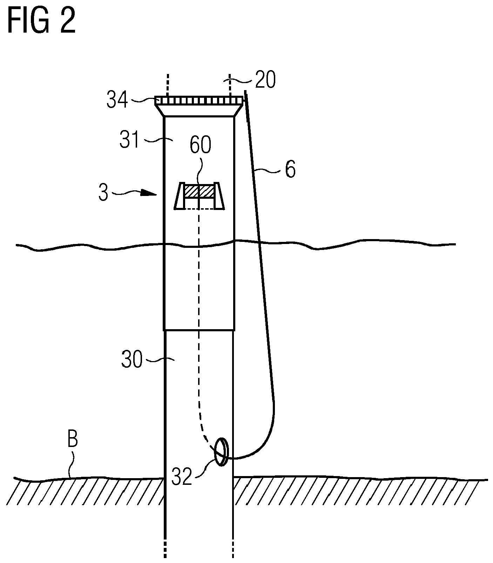

Fig 2 shows a first stage in the installation of a cable protection assembly for a wind turbine transmission cable arrangement. The diagram shows a messenger wire 6 connected to a winch 60 inside the transition piece 31. The other "exterior" end of the messenger wire 6 has been brought out through the aperture 32 at the base of the foundation 3 and back up to an upper level, for example to the level of a working platform 34, where it is temporarily secured. To lay the messenger wire 6 in this manner, a remotely operated underwater vehicle (ROV) may be used. The ROV can be controlled from a host ship such as an installation vessel, for example, as will be known to the skilled person.

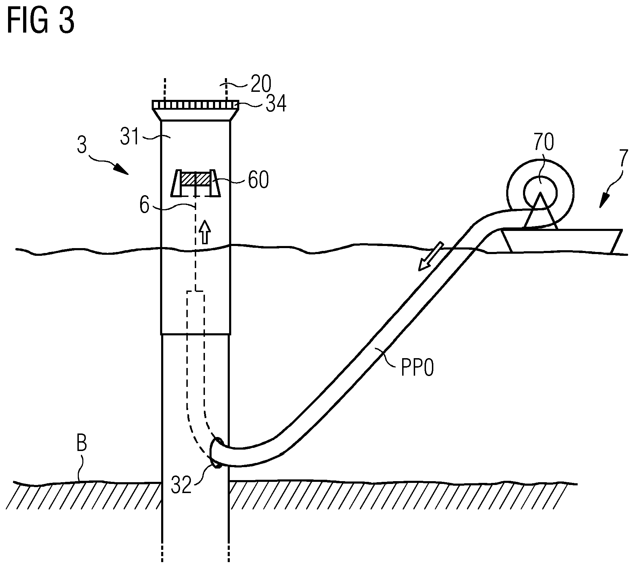

Fig 3 shows a subsequent stage in the installation of the cable protection assembly. Here, an outer protective HDPE pipe PP0 is being installed. The "exterior" end of the messenger wire 6 has been retrieved and brought to the deck of an installation vessel 7. The installation vessel 7 carries a drum 70 loaded with the outer protective HDPE pipe PP0. The messenger wire 6 is secured to one end of the HDPE pipe PP0. To guide the HDPE pipe PP0 into the transition piece 31, the winch 60 is operated to retract the messenger wire 6 and, at the same time, a set of roller wheels 71 on the installation vessel 7 can act to "push" the required length of HDPE pipe off the installation vessel 7. The length of the outer protective HDPE pipe PP0 can be about twice the height of the transition piece 31, for example. After this stage in the installation process, the "outer" end of the outer protective HDPE pipe PP0 is temporarily secured at the working platform 34 of the monopile foundation 3 in readiness for the next stage.

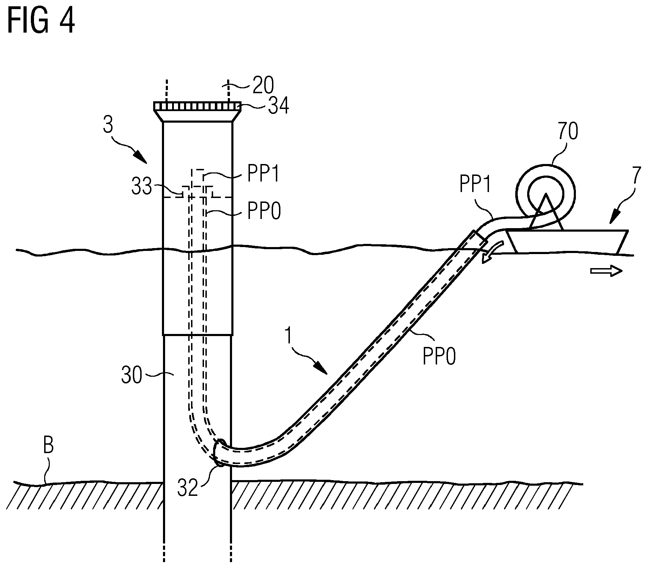

Fig 4 shows the next stage in the installation of the cable protection assembly. The "outer" end of the outer protective HDPE pipe PP0 has been brought to an installation vessel 7, which carries a drum 70 loaded with the inner protective HDPE pipe PP1. One end of the inner protective HDPE pipe PP1 is pushed into the outer protective HDPE pipe PP0 until it reaches the level of the cable hang-off 33 in the interior of the transition piece 31. The installation vessel 7 can then proceed to move away, and the outer protective HDPE pipe PP0, now loaded with a section of the inner protective HDPE pipe PP1, is allowed to descend to the level of the seabed B. As the installation vessel 7 moves away, it continues to pay out the inner protective HDPE pipe PP1. The inner protective HDPE pipe PP1 can be air-jetted, water-jetted or ploughed into the seabed B, or may be allowed to rest on the seabed B. The cable protection assembly 1 is now complete and can receive a transmission cable arrangement.

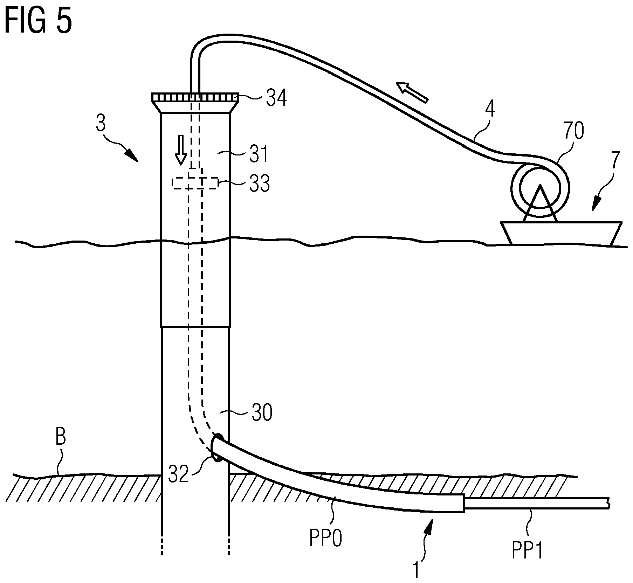

Fig 5 shows a subsequent stage. Here, an installation vessel 7 is loaded with a transmission cable arrangement 4. The transmission cable arrangement 4 can be provided as a cable bundle enclosed in an outer sheath, for example, and may comprise power cables to transport power from the wind turbine, communication cables to exchange data between a park controller and the wind turbine, etc. The transmission cable arrangement 4 is fed into the inner protective HDPE pipe PP1, commencing at the level of the cable hang-off 33. Because the cable protection assembly 1 is already installed, the transmission cable arrangement 4 is protected from the outset. In particular, damage to the transmission cable arrangement 4 at the critical passage through the aperture 32 to the seabed B is prevented by the pipe-in-pipe assembly PP0, PP1.

The transmission cable arrangement 4 can be fed into the inner protective HDPE pipe PP1 using a water-jetting apparatus similar to the apparatus used in a fibre optic cable installation, as will be known to the skilled person. This can be augmented by a roller-wheel system 71 on the installation vessel 7, to feed or push the transmission cable arrangement 4 into the inner protective HDPE pipe PP1 until the leading end of the transmission cable arrangement 4 has reached its destination (for example a neighbouring wind turbine foundation, a substation, etc.).

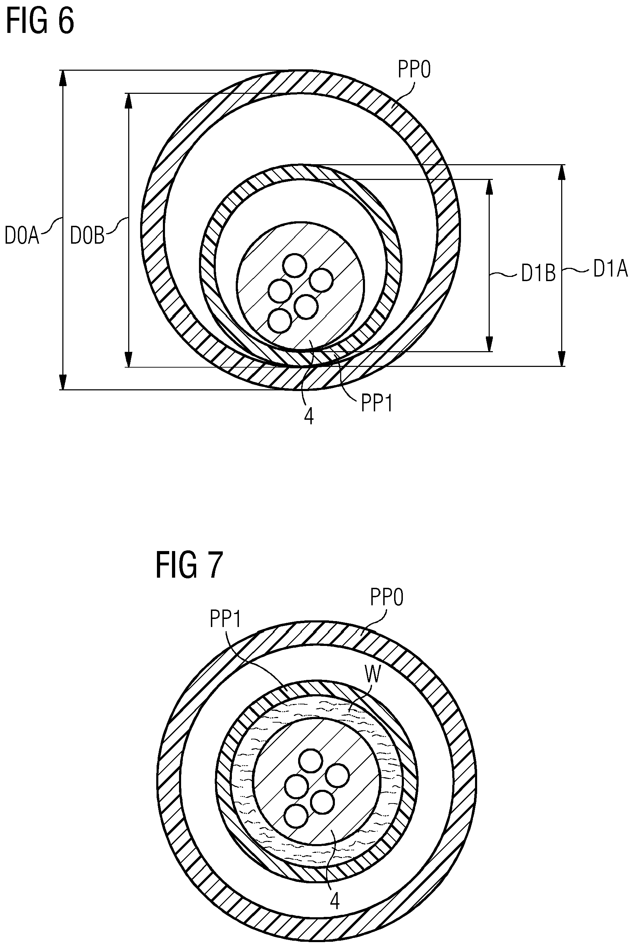

In one exemplary embodiment, as shown in Fig 6, the outer protective pipe PP0 is made of HDPE, and has an outer diameter D0A measuring 36 cm and an inner diameter D0B measuring 27 cm; the inner protective pipe PP1 is also made of HDPE, and has an outer diameter D1A measuring 22 cm and an inner diameter D1B measuring 20 cm. A three-core transmission cable arrangement 4 may have a diameter in the region of 16 cm. The bending radius of such an embodiment of the cable protection assembly 1 - in this example 2.4 m or more - is therefore greater than the transmission cable's minimum bending radius, and ensures that the transmission cable arrangement 4 cannot be bent to within this favourably large bending radius.

The space between the inner protective pipe PP1 and the transmission cable arrangement 4 is filled with water W, so that the transmission cable arrangement 4 is water-cooled. Fig 7 shows an exemplary cross-section through the inventive cable protection assembly 1, showing the outer protective pipe PP0, the inner protective pipe PP1, and the transmission cable arrangement 4 in the interior, with water filling the space between the inner protective pipe PP1 and the transmission cable arrangement 4.

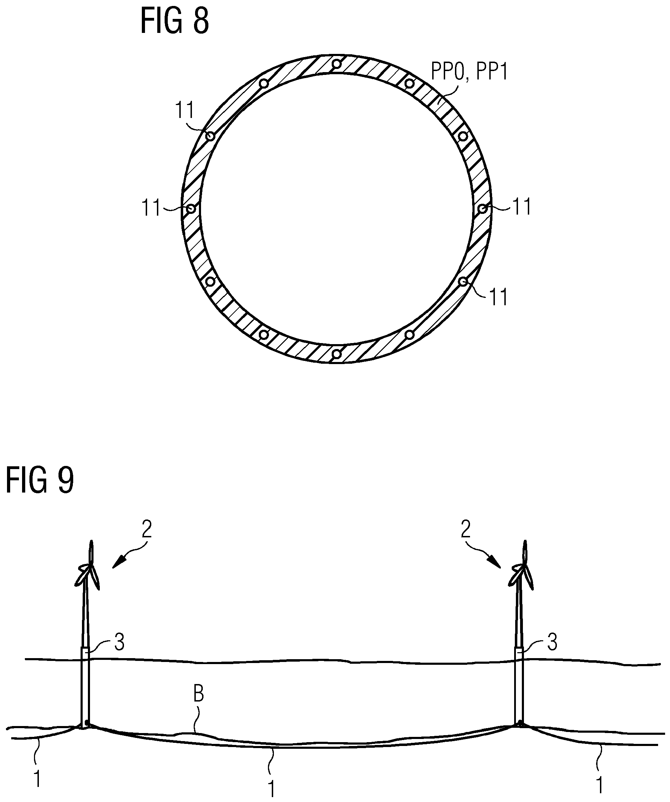

The inner protective pipe PP1 and the outer protective pipe PP1 can simply comprise HDPE without any additional material, i.e. the inner and outer protective pipes PP1, PP0 can be unarmoured. The inherent strength of the HDPE material and a suitable wall thickness can be sufficient to provide adequate protection to the transmission cable arrangement 4. In an alternative embodiment, one or both of the protective pipes PP0, PP1 can incorporate additional strengthening elements. Fig 8 shows a cross-section through an armoured outer protective HDPE pipe. The diagram shows steel wires 11 embedded in the pipe wall. These can be embedded during the HDPE extrusion process. With an armoured outer protective HDPE pipe PP0, for example, it may no longer be necessary to bury the cable assembly under the seabed.

Fig 9 shows two wind turbines 2 of an offshore array. A transmission cable arrangement extends between adjacent wind turbines 2 of the array, and also to an offshore or onshore substation (not shown). Each transmission cable arrangement is protected over its entire length by an embodiment of the inventive cable protection assembly 1. Particularly at the critical passages at the apertures of the transition pieces, the cable protection assemblies 1 ensure that the transmission cable arrangements are not damaged when the seabed is scoured from the base of the foundation 3.

Although the present invention has been disclosed in the form of preferred embodiments and variations thereon, it will be understood that numerous additional modifications and variations could be made thereto without departing from the scope of the invention. For example, the cable protection assembly may be used in any application requiring telecommunications cables or power cables to be arranged underwater, and is not restricted to the protection of a wind turbine transmission cable arrangement. For example, the inventive cable protection assembly may be used for other offshore installations such as oil rigs and gas rigs, or for any installation requiring a submerged interface at the seabed.

For the sake of clarity, it is to be understood that the use of "a" or "an" throughout this application does not exclude a plurality, and "comprising" does not exclude other steps or elements.

## Claims

1. A method of installing a transmission cable arrangement (4) of an offshore wind turbine (2), comprising a step of providing a cable protection assembly (1), wherein provision of the cable protection assembly (1) comprises the steps of
- installing an outer protective pipe (PP0) at a marine foundation (3), which outer protective pipe (PP0) is realised to extend from a cable hang-off (33) to the seabed (B); and
- laying an inner protective pipe (PP1) through the outer protective pipe (PP0) to extend from the cable hang-off (33) to a further destination;
and wherein the method of installing a transmission cable arrangement (4) further comprises a step of loading the transmission cable arrangement (4) into the inner protective pipe (PP1) towards the further destination (5).

2. A method according to claim 1, wherein the marine foundation (3) is a monopile foundation, and the step of installing the outer protective pipe (PP0) comprises a step of guiding the outer protective pipe (PP0) through an aperture (32) at the base of the monopile foundation (3).

3. A method according to claim 1 or claim 2, wherein the step of installing the outer protective pipe (PP0) is facilitated by a messenger wire (6) and a winch assembly (60) provided at the cable hang-off (33).

4. A method according to any of the preceding claims, wherein the step of installing the inner protective pipe (PP1) comprises pushing the inner protective pipe (PP1) from an installation vessel (7) into the outer protective pipe (PP0).

5. A method according to any of the preceding claims, wherein the step of installing the transmission cable arrangement (4) comprises pushing the transmission cable arrangement (4) into the inner protective pipe (PP1) at the cable hang-off (33).

6. A method according to any of the preceding claims, comprising a step of filling water (W) into a space between the transmission cable arrangement (4) and the inner protective pipe (PP1).

7. A cable protection assembly (1) for a transmission cable arrangement (4) of an offshore wind turbine (2), comprising
- an outer protective pipe (PP0) suspended from a cable hang-off (33) of a marine foundation (3) and extending to the seabed (B); and
- an inner protective pipe (PP1) extending between that offshore wind turbine (2) and a further destination (5), which inner protective pipe (PP1) is suspended from the cable hang-off (33) and extends through the outer protective pipe (PPO) to the seabed (B).

8. A cable protection assembly according to claim 7, wherein the outer protective pipe (PP0) comprises a HDPE pipe.

9. A cable protection assembly according to claim 7 or claim 8, wherein the inner protective pipe (PP1) comprises a HDPE pipe.

10. A cable protection assembly according to any of claims 7 to 9, wherein the dimensions of the outer protective pipe (PP0) are chosen to achieve a bending radius that exceeds the minimum bending radius of the transmission cable arrangement (4) .

11. A cable protection assembly according to any of claims 7 to 10, wherein a protective pipe (PP0, PP1) comprises embedded armouring (11).

12. A cable protection assembly according to any of claims 7 to 11, comprising a means of filling water (W) into a space between the transmission cable arrangement (4) and the inner protective pipe (PP1).

13. A wind turbine assembly comprising an offshore wind turbine (2) mounted on a marine foundation (3), a transmission cable arrangement (4) for exporting power, and further comprising a cable protection system (1) according to any of claims 7 to 12 to protect the transmission cable arrangement (4).

14. A wind turbine assembly according to claim 13, wherein the marine foundation (3) is a monopile foundation (3) comprising a vertical hollow transition piece (31) mounted on a monopile (30) and comprising an aperture (32) near the seabed (B).

15. A wind turbine assembly according to claim 13 or claim 14, wherein the outer protective pipe (PP0) extends from a cable hang-off (33) in the interior of the transition piece (31) through the aperture (32) to the seabed (B).
